# EUROPÄISCHE PATENTSCHRIFT

(11) **EP 3 359 481 B1**
(45) Veröffentlichungstag und Bekanntmachung des Hinweises auf die Patenterteilung: **10.05.2023**
(21) Anmeldenummer: 16790277.4
(22) Anmeldetag: 07.10.2016
(51) Int. Cl.: B66C 23/80, G01L 1/22, B66C 23/90, G01L 5/00

(54) **ABSTÜTZVORRICHTUNG ZUM ABSTÜTZEN EINER MOBILEN VORRICHTUNG**
SUPPORTING DEVICE FOR SUPPORTING A MOBILE DEVICE
DISPOSITIF DE SUPPORT POUR SUPPORTER UN DISPOSITIF MOBILE

(30) Priorität: 07.10.2015 DE 102015117086
(43) Veröffentlichungstag der Anmeldung: 15.08.2018
(73) Patentinhaber: Schwing GmbH, 44653 Herne (DE)
(72) Erfinder: KARRIE, Jörg-Peter, 45881 Gelsenkirchen (DE); TEBEEK, Wolfgang, 45768 Marl (DE); HILBK, Christopher, 59192 Bergkamen (DE); GESTRING, Benedikt, 44339 Dortmund (DE)
(74) Vertreter: Schneiders & Behrendt Bochum
(86) Internationale Anmeldenummer: PCT/EP2016/074046
(87) Internationale Veröffentlichungsnummer: WO 2017/060458

(56) Entgegenhaltungen:
- DE-U1-202014 000 334
- US-A- 3 853 001
- US-A- 4 752 012
- US-A1- 2003 173 324
- US-A1- 2007 090 612

## Beschreibung

Die Erfindung betrifft eine Abstützvorrichtung zum Abstützen einer mobilen Vorrichtung.

Die inzwischen an Großmanipulatoren, wie z.B. fahrbaren Betonpumpen, angeordneten Maste erreichen beträchtliche Höhen und erzeugen im ausgefahrenen bzw. ausgeklappten Zustand ein von der Schwenkposition und der Länge des Mastes abhängiges hohes Kippmoment. Um ein Umschlagen aufgrund des Kippmoments unterbinden zu können, werden Großmanipulatoren während des Einsatzes am Boden abgestützt. Hierzu weisen sie speziell ausgebildete Abstützvorrichtungen auf. Die Abstützung erfolgt hierbei meist durch seitlich ausfahrbare Stützen, an denen teleskopierbare bzw. absenkbare Elemente (Stützfüße) vorgesehen sind, die den Kontakt zum Boden herstellen. Die Stützen bilden dabei die Ecken eines Vierecks, dessen Seitenlinien eine Fläche umschreiben, innerhalb welcher der Gesamtschwerpunkt des Großmanipulators liegen muss, damit die Standsicherheit gewährleistet ist. Die Überwachung der Stützlast spielt eine wichtige Rolle, um darauf basierend die Belastung der Stützen ermitteln zu können und gegebenenfalls die Bewegung des Masts einschränken zu können und eine Überbelastung der Stützen bzw. ein Umkippen des Großmanipulators zu vermeiden. Die Überwachung der Stützlast kann außerdem wichtig sein, um feststellen zu können, dass die Stützfüße ordnungsgemäß abgesenkt sind und Bodenkontakt haben.

Die DE 20 2014 000334 U1 betrifft eine Stützkraftmesseinrichtung zur Messung einer Stützkraft an einem Abstützelement einer mobilen Arbeitsmaschine, mit mindestens einem Messelement, das mit einem unter Einwirkung der Stützkraft verformbaren Verformungskörper zur Bildung eines Sensors verbunden ist und ein stützkraftproportionales Signal abgibt. Die DE 20 2014 000334 U1 offenbart eine Abstützvorrichtung gemäß dem Oberbegriff des unabhängigen Anspruchs 1.

Die US 2007/090612 A1 betrifft ein mobiles Arbeitsgerät mit einem Fahrzeugchassis, zwei vorderen und zwei hinteren Stützauslegern mit jeweils Stützbeinen, die jeweils ein Messglied zur Bestimmung der Stützlast an jedem Stützbein umfassen, wobei ein Verbindungsbolzen als Messglied zur Bestimmung der Stützlast dient, indem eine Vorrichtung die an dem Verbindungsbolzen auftretende elastischen Biegung zur Bestimmung der für das Stützbein spezifischen Stützlast nutzt, wobei der Verbindungsbolzen hierzu zwei Spannungsmessstreifen aufnimmt.

Die US 4 752 012 A betrifft einen großen mobilen Turmkran. Ein Kransteuersystem verwendet hier elektronische Erfassungsvorrichtungen, die an vorbestimmten Stellen am Kranausleger und am Kranturm angebracht sind, um elektrische Signale bereitzustellen, die die Kranlastbedingungen betreffen. Die Erfassungsvorrichtungen in dem Ausleger umfassen Dehnungsmessstreifen, die in Bolzen ausgeführt sind, die bestimmte Abschnitte des Auslegers mechanisch miteinander verbinden.

Aus der EP 1 675 760 B1 ist beispielsweise ein mobiles Arbeitsgerät mit Stützauslegern und teleskopierbaren Stützbeinen bekannt, wobei die Stützbeine über Anlenkbolzen an einem Stützbeinkasten angelenkt sind. Die Anlenkbolzen sind als Messglied zur Bestimmung der Stützlast ausgebildet, wozu die Anlenkbolzen Dehnungsmessstreifen aufweisen. Die Ausrüstung der Bolzen mit Dehnungsmesstreifen weist mehrere Nachteile auf. Zum einen ist eine solche Ausgestaltung sehr aufwendig und der Bolzen wird an der Stelle, an der der Dehnungsmessstreifen eingebracht ist, geschwächt. Des Weiteren weisen Dehnungsmessstreifen als berührende Messeinrichtungen Alterungserscheinungen auf, so dass aufwendige und kostenintensive Wartungsarbeiten für eine dauerhaft zuverlässige Funktion notwendig sind.

Ferner ist es bekannt, bei Großmanipulatoren die am Manipulator selbst wirkenden Kräfte z.B. mittels der Messung des Hydraulikdrucks an den Hydraulikzylindern oder mit auf den Mastarmen angebrachten Dehnungsmesstreifen zu erfassen. Hiermit lässt sich beispielsweise eine Überlastung des Manipulators frühzeitig erkennen, um Überlastungen zu vermeiden. Mit diesen Messungen lässt sich zudem die vom Manipulator auf das Fahrgestell und damit die Stützen wirkende Kraft bestimmen, um beispielsweise ein Umkippen des Großmanipulators zu verhindern. Ein Verfahren zur Messung der Belastung eines derartigen Großmanipulators mittels einer Hydraulikdruckmessung ist beispielsweise in der US 5,359,516 angegeben, und ein Verfahren zur Stabilitätsüberwachung eines Großmanipulators nach diesem Messprinzip wird in der EP 1 356 910 A1 angegeben. Die Bestimmung des Hydraulikdrucks eines Hydraulikzylinders ist aber z. B. wegen der im Hydraulikzylinder wirkenden Losbrechkraft und undefinierter Druckverhältnisse, wenn sich der Kolben in seiner Endposition befindet, u.U. nicht zuverlässig genug, um für jede Betriebssituation die Kräfte eindeutig bestimmen zu können.

Es ist daher Aufgabe der Erfindung, eine Abstützvorrichtung bereitzustellen, bei der eine wirkungsvolle und dauerhaft genaue Erfassung der Stützkraft auf einfache Art und Weise gewährleistet werden kann. Zudem ist es Aufgabe der Erfindung, eine Abstützvorrichtung bereitzustellen, die sich ohne großen Aufwand in bestehende Konstruktionen von Großmanipulatoren, insbesondere Autobetonpumpen, integrieren lässt.

Gelöst wird diese Aufgabe durch eine Abstützvorrichtung mit den Merkmalen des Anspruchs 1. Vorteilhafte Ausgestaltungen sind jeweils Gegenstand der abhängigen Ansprüche.

Eine erfindungsgemäße Abstützvorrichtung zum Abstützen einer mobilen Vorrichtung am Boden umfasst eine Stütze und eine Sensoreinrichtung, die ein stützkraftabhängiges Signal erzeugt, wobei wenigstens ein Bolzen zumindest einen Teil der Stützkraft überträgt, wodurch der Bolzen reversibel verformt wird, wobei die Sensoreinrichtung auf die Verformung des Bolzens anspricht.

Die Stützkraft ist im Sinne der Erfindung diejenige (typischerweise nach oben gerichtete) Kraft, die an der Abstützvorrichtung bei Abstützung der mobilen Vorrichtung am Boden angreift. Die Stützkraft wird z.B. über einen absenkbaren Stützfuß in vertikaler Richtung in die Stütze eingeleitet.

Die erfindungsgemäße Abstützvorrichtung weist gegenüber dem Stand der Technik den Vorteil auf, dass sich die Stützlast in den Stützen einfach und zuverlässig bestimmen lässt, so dass darauf basierend der Bodenkontakt der Stützen bzw. der Stützfüße automatisch festgestellt und/oder die Bewegung des Mastarms abhängig von der erfassten Stützkraft gezielt gesteuert werden kann. Dies wird erfindungsgemäß durch die Sensoreinrichtung erreicht, wobei diese auf die Verformung des Bolzens anspricht. Vorteilhafte Ausgestaltungen und Weiterbildungen der Erfindung ergeben sich aus den nachfolgenden abhängigen Ansprüchen.

Eine vorteilhafte Ausgestaltung der Abstützvorrichtung zeichnet sich durch wenigstens einen magnetisierten Bolzen aus, der zumindest einen Teil der Stützkraft überträgt, wobei die Sensoreinrichtung einen Magnetfeldsensor aufweist, der das von dem magnetisierten Bolzen erzeugte Magnetfeld detektiert. Hierdurch lässt sich die Stützlast in den Stützen einfach und zuverlässig bestimmen, so dass darauf basierend der Bodenkontakt der Stützen bzw. der Stützfüße automatisch festgestellt und/oder die Bewegung des Mastarms abhängig von der erfassten Stützkraft gezielt gesteuert werden kann. Dies wird erfindungsgemäß durch die Sensoreinrichtung mit Magnetfeldsensor erreicht, wobei dieser das von dem magnetisierten Bolzen erzeugte Magnetfeld detektiert.

Vorteilhafterweise weist der magnetisierte Bolzen eine magnetische Kodierung auf, die am Ort des Magnetfeldsensors durch den inversen magnetostriktiven Effekt ein die Stützkraft charakterisierendes Magnetfeld erzeugt.

Unter Magnetostriktion versteht man die Deformation magnetischer, insbesondere ferromagnetischer Stoffe, infolge eines angelegten magnetischen Feldes. Hierbei erfährt der Körper bei konstantem Volumen eine elastische Längenänderung. Die inverse Magnetostriktion macht sich zunutze, dass sich die Magnetisierung eines ferromagnetischen Körpers durch mechanische Spannungen bzw. durch das Einwirken einer Kraft ändert. Die Einwirkung von Spannungen und/oder Kräften auf einen Körper führt zu dessen Deformation, wodurch sich sein Magnetfeld ändert. Diese Änderung des Magnetfeldes bzw. der Feldstärke des ferromagnetischen Körpers kann durch eine geeignete Sensoreinrichtung (Magnetfeldsensor) erfasst werden. Aus dem Messsignal des Magnetfeldsensors kann auf die einwirkende Kraft zurückgeschlossen werden.

Durch die Krafteinwirkung auf den magnetisierten Bolzen gemäß der Erfindung ändert sich das von dem Bolzen erzeugte Magnetfeld. Der Bolzen kann in geeigneter Weise mit einem räumlichen Magnetisierungsmuster versehen, d.h. magnetisch kodiert sein, wodurch z.B. in einer als Magnetfeldsensor verwendeten Spule bei Krafteinwirkung eine Spannung induziert wird, die sich zur einwirkenden Kraft im Wesentlichen linear verhält. Folglich kann durch die Messung der Spannung die Stützkraft betragsmäßig erfasst werden. Das Prinzip der Kraftmessung mittels eines magnetisierten Bolzens ist aus dem Stand der Technik bekannt (siehe z.B. WO 02/063262 A1).

Eine weitere vorteilhafte Ausgestaltung der Erfindung sieht vor, dass die Sensoreinrichtung die Beanspruchung des magnetisierten Bolzens anhand des Magnetfeldes als Maß für die übertragene Stützkraft ermittelt. Auf diese Weise können sehr einfach Rückschlüsse auf die Lastgröße gezogen werden, die durch die Stützkraft auf dem magnetisierten Bolzen lastet.

Besonders vorteilhaft ist die Ausführung, dass die Sensoreinrichtung wenigstens einen Dehnungsmessstreifen am oder im Bolzen aufweist, der ein die Stützkraft charakterisierendes Signal erzeugt. Durch die Anordnung eines Dehnungsmessstreifens am Bolzen ist eine einfache aber zuverlässige Möglichkeit gegeben ein die Stützkraft charakterisierendes Signal zu erhalten. Mit der Anordnung des Dehnungsmessstreifens in dem Bolzen kann die Zuverlässigkeit der Sensoreinrichtung weiter erhöht werden, da die Anordnung im Bolzen den Dehnungsmessstreifen unabhängig von äußeren Umwelteinflüssen macht.

Eine weitere vorteilhafte Ausgestaltung Erfindung sieht vor, dass der Bolzen einen Hohlraum zur Aufnahme von Sensoreinrichtung und/oder Dehnungsmessstreifen aufweist. Die Ausbildung eines verschließbaren Hohlraumes in dem Bolzen erleichtert die Aufnahme der Sensoreinrichtung oder des Dehnungsmessstreifen in dem Bolzen und macht Wartungsarbeiten leichter.

Weiter vorteilhaft ist die Ausführung, dass der Bolzen mindestens eine umlaufende Nut aufweist. Umlaufende Nuten im Bolzen bewirken insbesondere eine höhere Scherverformung, sodass sich ein die Stützkraft charakterisierendes Signal leichter detektieren lässt und dieses Signal außerdem genauere Aufschlüsse über die Größe der übertragenen Stützkraft liefert.

Die Sensoreinrichtung der erfindungsgemäßen Abstützvorrichtung kann für eine Scherkraftmessung, für eine Durchbiegungsmessung oder für eine Drehmomentmessung ausgelegt sein. Die Stützkraft wird dabei - je nach Konstruktion der Abstützvorrichtung und Anordnung des Bolzens - entweder in ein auf den Bolzen einwirkendes Drehmoment bzw. eine auf den Bolzen einwirkende Scherkraft oder eine auf den Bolzen einwirkende Biegekraft umgewandelt. Der vorzugsweise magnetisierte Bolzen, der z. B. zwei Bauteile der Abstützvorrichtung miteinander verbindet, wird entsprechend bei der Übertragung der Stützkraft entweder auf Scherung, Durchbiegung oder auf Verdrehung beansprucht. Eine vorteilhafte Ausgestaltung sieht vor, dass der Bolzen bei der Übertragung der Stützkraft auf Scherung beansprucht wird. Eine Ausführung der Erfindung sieht vor, dass der magnetisierte Bolzen bei der Übertragung der Stützkraft auf Verdrehung beansprucht wird. Eine vorteilhafte Ausgestaltung sieht vor, dass der Bolzen bei der Übertragung der Stützkraft auf Durchbiegung beansprucht wird.

Die Verwendung der auf dem inversen magnetostriktiven Effekt basierenden Sensorvorrichtung bietet den Vorteil, dass diese berührungslos und verschleißfrei misst, wodurch teure Wartungsarbeiten nicht mehr nötig sind. Ferner sind durch die berührungslose Messung gewisse Toleranzen zwischen den Bauteilen zulässig, ohne dass sich dies negativ auf die Messwerte auswirkt. Auch das Vorhandensein von Schmutz in der Umgebung des Bolzens und des Sensors führt nicht zu einer Beeinträchtigung des Messergebnisses.

Eine Ausführungsform der Erfindung sieht vor, dass die Stütze einen mittels eines Hydraulikzylinders anheb- und absenkbaren Stützfuß aufweist. Idealerweise ist die Abstützvorrichtung bzw. die Stütze vertikal teleskopierbar ausgebildet. Der teleskopierbare Teil kann dabei über einen vorzugsweise magnetisierten Bolzen gelagert sein. Bevorzugt weist die Stütze einen mittels eines Hydraulikzylinders anheb- bzw. absenkbaren Stützfuß auf.

Vorteilhafterweise ist der Hydraulikzylinder in einer weiteren vorteilhaften Ausführungsform über den vorzugsweise magnetisierten Bolzen an der Stütze gelagert. Eine weitere Ausführungsform sieht vor, dass der Stützfuß über den vorzugsweise magnetisierten Bolzen an dem Hydraulikzylinder gelagert ist. Eine alternative Ausführungsform sieht vor, dass der Stützfuß über einen weiteren Bolzen an dem Hydraulikzylinder gelagert ist. Denkbar ist auch, dass sowohl der Stützfuß über einen vorzugsweise magnetisierten Bolzen am Hydraulikzylinder und der Hydraulikzylinder über einen weiteren vorzugsweise magnetisierten Bolzen an der Stütze gelagert sind. In allen Fällen wird die Stützkraft über den bzw. die vorzugsweise magnetisierten Bolzen übertragen.

Die Erfindung sieht vor, dass der Stützfuß über ein Kreuzgelenk an der Stütze gelagert ist, wobei der Bolzen ein Gelenkbolzen des Kreuzgelenks ist. Bei dieser Ausgestaltung wirkt die Stützkraft immer zentral, ohne seitlichen Versatz, auf den Bolzen, wodurch die Stützkraft auch dann noch mit hoher Genauigkeit bestimmt werden kann, wenn der Untergrund, auf dem der Stützfuß abgestützt wird, nicht völlig eben ist und der Stützfuß schräg zur Stütze auf dem Boden aufsetzt.

Weiter vorteilhaft ist die Ausgestaltung, dass das Kreuzgelenk eine Verdrehsicherung aufweist. Diese Verdrehsicherung stellt auf einfache Weise sicher, dass der Bolzen sich nicht relativ zum Stützfuß verdrehen und axial im Lagergehäuse fixiert ist.

Von besonderem Vorteil ist die Ausführung, dass das Kreuzgelenk einen weiteren, quer zum Bolzen ausgerichteten Gelenklagerbolzen aufweist, dessen Gelenkachse in einer Ebene mit der Gelenkachse des Bolzens liegt. Die Anordnung der Gelenksachsen des Kreuzgelenks auf einer Ebene reduziert die Bauhöhe des Kreuzgelenks deutlich, sodass dieses leichter an der Stütze und dem Stützfuß angeordnet werden kann.

Eine besonders vorteilhafte Ausgestaltung sieht vor, dass der Bolzen in einem Lagergehäuse des Gelenklagerbolzens gelagert ist. Die Anordnung des Bolzens in einem Lagergehäuse des Gelenklagerbolzens bietet den Vorteil, dass die Stützkraft von dem Gelenklagerbolzen optimal über das Lagergehäuse auf den Bolzen übertragen wird. Hier ist es von besonderem Vorteil, wenn das Lagergehäuse über ebene Seitenflächen verfügt, da hierdurch die Scherverformung bzw. die Scherkraft optimal auf den Bolzen übertragen wird. Die Übertragung dieser Kräfte durch die Seitenflächen auf den Bolzen erfolgt besonders vorteilhaft im Bereich der umlaufenden Nuten am Bolzen, sodass die Stützkraft besonders genau bestimmt werden kann.

Weiter vorteilhaft ist die Ausgestaltung, dass zwischen dem Bolzen und dem Gelenklagerbolzen ein selbstschmierendes Kunststofflager angeordnet ist. Die Anordnung eines selbstschmierenden Kunststofflagers im Kreuzgelenk macht dieses langlebig und relativ wartungsfrei.

Ferner wird eine nicht erfindungsgemäße Abstützvorrichtung mit einen im Wesentlichen horizontal orientierten Stützausleger beschrieben. Der Stützausleger ist an einem Grundrahmen bzw. Fahrgestell der mobilen Vorrichtung angeordnet und bevorzugt teleskopierbar, ausfahrbar oder ausschwenkbar ausgebildet. Vorteilhafterweise ist die Stütze endseitig an dem Stützausleger angeordnet. Die Verbindung zwischen Stütze und Stützausleger kann über einen vorzugsweise magnetisierten Bolzen erfolgen. Eine vorteilhafte Ausführung sieht vor, dass die Stütze endseitig an einem mit einem Grundrahmen der mobilen Vorrichtung verbundenen, im Wesentlichen horizontal orientierten Stützausleger angeordnet ist.

Eine vorteilhafte Ausgestaltung ist, dass der Stützausleger in horizontaler Richtung ausfahrbar oder ausschwenkbar ist.

Eine weitere vorteilhafte Ausgestaltung ist, dass die Stütze über den Bolzen an dem Stützausleger gelagert ist.

Eine weitere vorteilhafte Ausführungsform sieht vor, dass die Stütze zusätzlich über einen von dem vorzugsweise magnetisierten Bolzen beabstandet angeordneten Lagerbolzen an dem Stützausleger gelagert ist. Diese Ausgestaltung bietet den Vorteil, dass der vorzugsweise magnetisierte Bolzen kleiner ausgebildet sein kann, da nicht die volle Stützkraft auf diesen wirkt. Die Stütze und der Stützausleger sind dabei bevorzugt so über den Lagerbolzen miteinander verbunden, dass bei Vorliegen einer Stützkraft der vorzugsweise magnetisierte Bolzen mit einer Scherkraft belastet wird.

Es ist auch möglich, dass die Stütze und der Stützausleger so über einen Lagerbolzen miteinander verbunden sind, dass eine auf die Abstützvorrichtung wirkende Stützkraft zu einer Drehmomentbeanspruchung des vorzugsweise magnetisierten Bolzens führt. Weitere Ausgestaltungen sehen vor, dass der Lagerbolzen relativ zum Stützausleger oder relativ zur Stütze in Richtung quer zu seiner Längserstreckung verlagerbar ist. Hierzu kann entweder die Stütze oder der Stützausleger eine Nut, ein Langloch oder einen Schlitz aufweisen, innerhalb der der Lagerbolzen verschiebbar angeordnet ist.

Eine weitere Ausführung sieht vor, dass der vorzugsweise magnetisierte Bolzen mit der Stütze und mit dem Stützausleger drehfest verbunden ist. Bei Krafteinwirkung bewirkt diese Anordnung, dass der vorzugsweise magnetisierte Bolzen in sich verdreht wird. Das Drehmoment hängt dabei von der einwirkenden Stützkraft direkt ab.

In einer weiteren Ausführung kann der Stützausleger über einen vorzugsweise magnetisierten Bolzen mit dem Grundrahmen oder einem Fahrzeugrahmen des Fahrzeugs verbunden sein. Dies ist insbesondere dann von Vorteil, wenn der Stützausleger schwenkbar am Fahrzeugrahmen angeordnet ist.

Eine weitere Ausgestaltung sieht vor, dass der Bolzen Teil einer Führung ist, die den ausfahrbaren Stützausleger an dem Grundrahmen des Fahrzeugs führt. Sind die Stützausleger ausfahrbar an dem Fahrzeugrahmen angeordnet, dann werden die Stützausleger idealerweise in bzw. an einer Führung geführt. Der vorzugsweise magnetisierte Bolzen kann Teil einer solchen Führung sein.

Ferner wird ein Großmanipulator beschrieben. Der Großmanipulator umfasst eine Abstützvorrichtung, einen Mastarm, der einen um eine Hochachse drehbaren Drehschemel und eine Mehrzahl von Mastsegmenten aufweist, wobei die Mastsegmente an Knickgelenken über Gelenkbolzen jeweils mit einem benachbarten Mastsegment oder dem Drehschemel schwenkbeweglich verbunden sind, wobei die Mastsegmente mittels Hydraulikzylindern gegen den Drehschemel oder gegeneinander verschwenkbar sind, die über Anlenkbolzen auf die Mastsegmente wirken, und eine Mastsensorik, die ein von der Mastbelastung abhängiges Signal erzeugt, wobei wenigstens einer der Gelenkbolzen oder der Anlenkbolzen reversibel verformbar ist und die Mastsensorik einen Sensor aufweist, der auf die Verformung des Gelenkbolzens oder Anlenkbolzens anspricht.

Der Großmanipulator weist gegenüber dem Stand der Technik den Vorteil auf, dass sich die Belastung der Gelenkbolzen einfach und zuverlässig bestimmen lässt, so dass darauf basierend die Bewegung des Mastarms bzw. der einzelnen Mastsegmente gezielt gesteuert werden kann. Eine Überlastung des Mastes kann frühzeitig erkannt werden.

Eine vorteilhafte Ausgestaltung des Großmanipulators sieht vor, dass der Gelenkbolzen oder der Anlenkbolzen magnetisiert ist, wobei ein Magnetfeldsensor das von dem Gelenkbolzen oder Anlenkbolzen erzeugte Magnetfeld detektiert. Hierdurch lässt sich die Belastung der Gelenkbolzen einfach und zuverlässig bestimmen, so dass darauf basierend die Bewegung des Mastarms bzw. der einzelnen Mastsegmente gezielt gesteuert werden kann. Eine Überlastung des Mastes kann frühzeitig erkannt werden. Die berührungslose Messung der Mastbelastung basiert wiederum auf dem Prinzip der inversen Magnetostriktion und funktioniert wie zuvor in Bezug auf die Abstützvorrichtung beschrieben.

Eine weitere vorteilhafte Ausgestaltung des Großmanipulators ist, dass der Gelenkbolzen oder der Anlenkbolzen wenigstens einen Dehnungsmessstreifen am oder im Gelenkbolzen oder Anlenkbolzen aufweist, der ein die Stützkraft charakterisierendes Signal erzeugt. Mit dieser Ausgestaltung lässt sich die Belastung der Gelenkbolzen einfach und zuverlässig bestimmen, so dass darauf basierend die Bewegung des Mastarms bzw. der einzelnen Mastsegmente gezielt gesteuert werden kann. Eine Überlastung des Mastes kann so frühzeitig erkannt werden.

Bei der Auswahl eines geeigneten Bolzens für die Sensorik spielt beispielsweise eine Rolle, ob an dem jeweiligen Mastgelenk eine Rohrleitung zentral durch das Gelenk bzw. den Gelenkbolzen geführt wird. Ein Hohlbolzen mit einem vergleichsweise großen Innendurchmesser ist für die Anwendung dieses Messverfahrens weniger geeignet. Andererseits können für die Verschwenkung zweier Mastsegmente gegeneinander zwei parallel angeordnete Hydraulikzylinder vorgesehen sein. Hierbei werden die Kräfte über zwei magnetisierte Bolzen übertragen und abgegriffen. Aus Gründen der Redundanz können beispielsweise auch beide Anlenkbolzen magnetisiert und mit Sensoren ausgestattet sein, um die Messergebnisse gegeneinander abzugleichen und ggfs. bei Nichtübereinstimmung der Messergebnisse Notmaßnahmen einzuleiten. Dies gilt auch für eine Kombination aus Anlenkbolzen und Gelenkbolzen.

Idealerweise weist der Großmanipulator eine erfindungsgemäße Abstützvorrichtung auf.

Ferner ist ein weiterer Großmanipulator beschrieben. Dieser Großmanipulator umfasst eine Abstützvorrichtung, einen Mastarm, der einen um eine Hochachse drehbaren Drehschemel und eine Mehrzahl von Mastsegmenten aufweist, wobei die Mastsegmente an Knickgelenken über Gelenkbolzen jeweils mit einem benachbarten Mastsegment oder dem Drehschemel schwenkbeweglich verbunden sind, und einer Sensoreinrichtung, die ein lastabhängiges Signal erzeugt, wobei wenigstens ein Bolzen, der reversibel verformbar ist vorgesehen ist, wobei die Sensoreinrichtung einen Sensor aufweist, der auf die Verformung des Bolzens anspricht.

Eine vorteilhafte Ausgestaltung des Großmanipulators sieht vor, dass der Bolzen magnetisiert ist, wobei die Sensoreinrichtung einen Magnetfeldsensor aufweist, der das von dem magnetisierten Bolzen erzeugte Magnetfeld detektiert.

Eine weitere vorteilhafte Ausgestaltung des Großmanipulators ist, dass der Bolzen wenigstens einen Dehnungsmessstreifen am oder im Bolzen aufweist, der ein die Stützkraft charakterisierendes Signal erzeugt.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1: eine schematische Seitenansicht eines Großmanipulators in einer Ausgestaltung,
- Fig. 2: schematische Ansicht einer Abstützvorrichtung in einer ersten Ausgestaltung,
- Fig. 3a: schematische Vorderansicht einer Abstützvorrichtung in einer zweiten Ausgestaltung,
- Fig. 3b: schematische Seitenansicht der in Figur 3a gezeigten Abstützvorrichtung,
- Fig. 4: schematische Seitenansicht einer Abstützvorrichtung in einer dritten Ausgestaltung,
- Fig. 5: schematische Seitenansicht einer Abstützvorrichtung in einer vierten Ausgestaltung,
- Fig. 6: schematische Seitenansicht einer Abstützvorrichtung in einer fünften Ausgestaltung,
- Fig. 7: schematische Ansicht einer Abstützvorrichtung in einer sechsten Ausgestaltung.
- Fig. 8a: schematische Vorderansicht einer erfindungsgemäßen Abstützvorrichtung in einer siebten Ausgestaltung
- Fig. 8b: schematische Seitenansicht der in Figur 8a gezeigten Abstützvorrichtung
- Fig. 8c: schematische Vorderansicht entsprechend Figur 8a gezeigten Abstützvorrichtung auf schrägem Untergrund
- Fig. 9a: perspektivische Vorderansicht einer erfindungsgemäßen Abstützvorrichtung in siebter Ausgestaltung
- Fig. 9b: perspektivische Seitenansicht der in Figur 9a gezeigten Abstützvorrichtung
- Fig. 9c: perspektivische Rückansicht der in Figur 9a und 9b gezeigten Abstützvorrichtung
- Fig. 10a: perspektivische Detailansicht von Kreuzgelenk
- Fig. 10b: Seitenansicht von Kreuzgelenk
- Fig. 10c: weitere Seitenansicht von Kreuzgelenk
- Fig. 10d: Schnittdarstellung durch Kreuzgelenk
- Fig. 11: Schnittdarstellung durch Kreuzgelenk

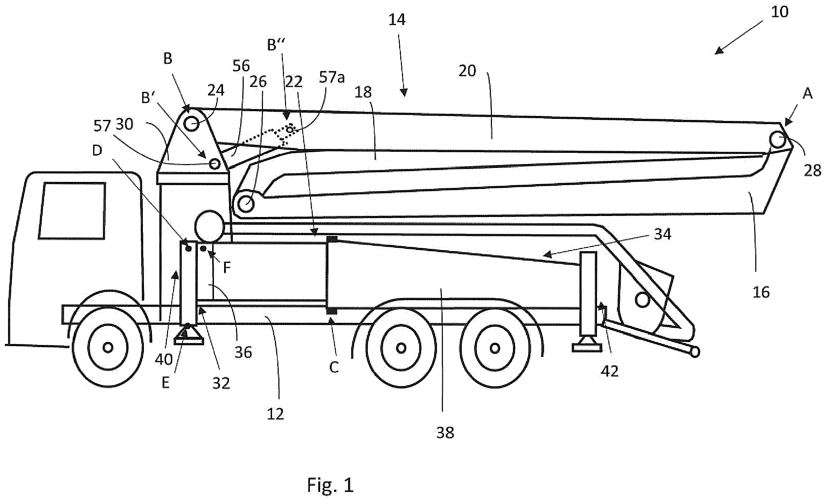

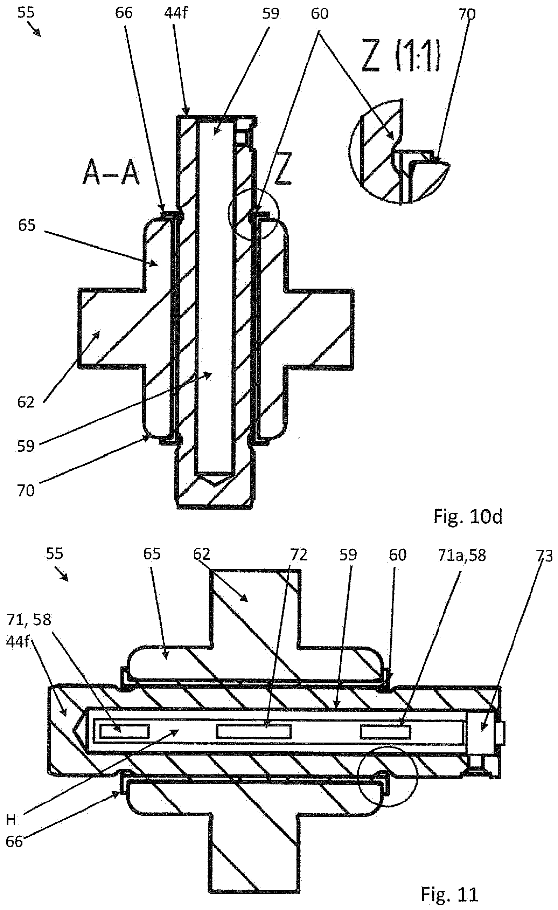

Figur 1 zeigt eine schematische Seitenansicht eines Großmanipulators 10 in einer möglichen Ausgestaltung. Es handelt sich bei dem Ausführungsbeispiel um eine fahrbare Betonpumpe. Der Großmanipulator 10 weist ein Fahrgestell bzw. Grundrahmen 12 auf, an dem ein ausfahrbarer bzw. verschwenkbarer Mast 14 mit mehreren Mastsegmenten 16, 18, 20 und ein Abstützsystem 22 angeordnet sind. Die Mastsegmente 16, 18, 20 sind an Knickgelenken über Gelenkbolzen 24, 26, 28 jeweils mit einem benachbarten Mastsegment 16, 18, 20 oder einem Drehschemel 30 schwenkbeweglich verbunden. Die Mastsegmente 16, 18, 20 werden mittels Hydraulikzylindern 56 gegeneinander bzw. gegen den Drehschemel 30 verschwenkt. Aus Gründen der Übersichtlichkeit ist in Figur 1 nur der Hydraulikzylinder 56 zwischen dem Drehschemel 30 und dem ersten Mastsegment 20 dargestellt. Weitere, nicht dargestellte Hydraulikzylinder zwischen den Mastsegmenten 16, 18, 20 verschwenken die Mastsegmente 16, 18, 20 gegeneinander. Die Kraft des Hydraulikzylinders 56 wirkt über Anlenkbolzen 57, 57a auf die Mastsegmente 16, 18, 20. Der Großmanipulator 10 weist ferner wenigstens eine Mastsensorik A, B auf, die ein von der Mastbelastung abhängiges Signal erzeugt. Die Mastsensorik A, B, Ba, Bb umfasst vorzugsweise einen Magnetfeldsensor, der das von dem vorzugsweise magnetisierten Gelenkbolzen 24, 26, 28 oder den vorzugsweise magnetisierten Anlenkbolzen 57, 57a erzeugte Magnetfeld detektiert. Alternativ kann die Verformung der Gelenkbolzen 24, 26, 28 oder der Anlenkbolzen 57, 57a auch anders erfasst werden. So kann die Mastsensorik A, B, Ba, Bb einen Sensor aufweisen, der auf die Verformung des Gelenkbolzens 24, 26, 28 oder des Anlenkbolzens 57, 57a anspricht. Bevorzugt ist an dem oder in dem Gelenkbolzen 24, 26, 28 oder Anlenkbolzen 57, 57a ein Dehnungsmessstreifen 58 (Fig. 11) vorgesehen, der ein die Stützkraft charakterisierendes Signal erzeugt. Bei der Auswahl eines geeigneten Bolzens für die Sensorik spielt beispielsweise eine Rolle, ob an dem jeweiligen Mastgelenk eine Rohrleitung zentral durch das Gelenk, bzw. den Gelenkbolzen geführt wird, somit also ein Hohlbolzen mit einem vergleichsweise großen Innendurchmesser vorliegt, der für die Anwendung dieses Messverfahrens weniger geeignet ist. Andererseits können für die Verschwenkung zweier Mastsegmente gegeneinander zwei parallel angeordnete Hydraulikzylinder 56 vorgesehen sein, so dass die Kräfte über zwei vorzugsweise magnetisierte Bolzen übertragen werden und abgegriffen werden. Aus Gründen der Redundanz können beispielsweise auch beide Anlenkbolzen 57, 57a magnetisiert und mit Sensoren B, Bb ausgestattet sein, um die Messergebnisse gegeneinander abzugleichen und ggfs. bei Nichtübereinstimmung der Messergebnisse Notmaßnahmen einzuleiten. Dies gilt auch für eine Kombination aus Anlenkbolzen 57, 57a und Gelenkbolzen 24, 26, 28.

Durch die Messung der Kraft am Mastgelenk, sei es am Gelenkbolzen 24 oder an einem der Anlenkbolzen 57, 57a, lässt sich das auf den Drehschemel 30 wirkende Lastmoment des Mastarmes 14 bestimmen, wodurch sich, unter Einbeziehung der Position der Stützen, die Stabilität des Großmanipulators 10 überwachen lässt, und somit ein Umkippen des Großmanipulators verhindert werden kann.

Das Abstützsystem 22 umfasst bevorzugt zwei vordere 32 und zwei hintere Abstützungen 34, die vorteilhafterweise jeweils einen horizontal verlaufenden Stützausleger 36, 38 und eine Stütze 40, 42 mit einem teleskopierbaren Element aufweisen. Die hintere und/ oder die vordere Abstützung 32, 34 kann dabei eine Abstützvorrichtung mit einer Sensoreinrichtung C, D, E, F aufweisen, wobei die Sensoreinrichtung C, D, E, F vorzugsweise einen Magnetfeldsensor umfasst, der das von einem magnetisierten Bolzen 44 erzeugte Magnetfeld detektiert. Alternativ kann hintere und/ oder die vordere Abstützung 32, 34 eine Abstützvorrichtung mit einer Sensoreinrichtung C, D, E, F aufweisen, wobei die Sensoreinrichtung C, D, E, F vorzugsweise ein Sensor aufweist, der auf die Verformung des Bolzens 44 anspricht. Dieser Sensor ist vorzugsweise als Dehnungsmessstreifen 58 (Fig. 11) ausgebildet, der ein die Stützkraft charakterisierendes Signal erzeugt.

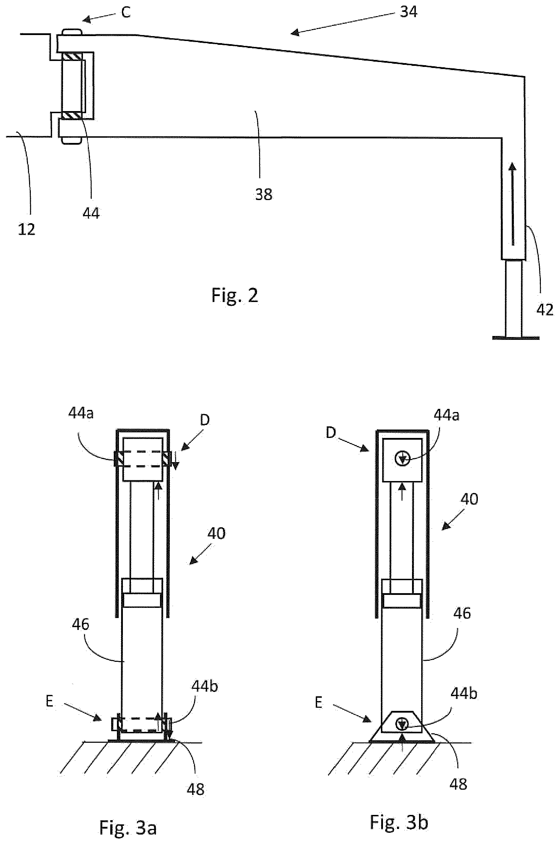

Figur 2 zeigt eine schematische Ansicht einer Abstützvorrichtung in einer ersten Ausgestaltung. Bei der in Figur 2 dargestellten Abstützvorrichtung handelt es sich bevorzugt um die hintere Abstützung 34 des Großmanipulators 10. Der Stützausleger 38 ist durch einen vorzugsweise magnetisierten Bolzen 44 mit den Grundrahmen 12 verbunden. Der Bolzen 44 überträgt die Stützkraft von dem Stützausleger 38 auf den Grundrahmen 12. Die Abstützvorrichtung weist zudem eine Sensoreinrichtung C auf, die ein stützkraftabhängiges Signal erzeugt. Die Sensoreinrichtung C weist vorzugsweise einen Magnetfeldsensor (nicht dargestellt) auf, der das von dem vorzugsweise magnetisierten Bolzen 44 erzeugte Magnetfeld detektiert. Der vorzugsweise magnetisierte Bolzen 44 ist so ausgebildet, dass er eine magnetische Kodierung aufweist, die am Ort des Magnetfeldsensors durch den inversen magnetostriktiven Effekt ein die Stützkraft charakterisierendes Magnetfeld erzeugt. Alternativ kann die Verformung des Bolzens 44 auch anders erfasst werden. So kann die Sensoreinrichtung C einen Sensor aufweisen, der auf die Verformung des Bolzens 44 anspricht. Bevorzugt ist an dem oder in dem Bolzen 44 ein Dehnungsmessstreifen 58 (Fig. 11) vorgesehen, der ein die Stützkraft charakterisierendes Signal erzeugt. Wird der Großmanipulator 10 mittels des Abstützsystems 22 abgestützt, so wird hierdurch der Bolzen 44 zwischen Stützausleger 38 und Fahrgestell 12 auf Scherung beansprucht. Die hiermit einhergehende Verformung des Bolzen 44 oder Änderung des Magnetfeldes wird von der Sensoreinrichtung erfasst und anhand dessen kann die Belastung der Stütze ermittelt werden, z.B. um auf die Weise automatisch festzustellen, dass die Stütze 42 Bodenkontakt hat.

Die Figuren 3a und 3b zeigen eine schematische Darstellung einer Abstützvorrichtung in einer zweiten Ausgestaltung. Während Figur 3a eine Vorderansicht zeigt, zeigt Figur 3b eine Seitenansicht der Abstützvorrichtung. Die dargestellte Stütze 40 weist einen mittels eines Hydraulikzylinders 46 anheb- und absenkbaren Stützfuß 48 auf. Der Hydraulikzylinder 46 ist über einen vorzugsweise magnetisierten Bolzen 44a an der Stütze 40 gelagert. Wirkt die Stützkraft auf den Hydraulikzylinder 46, so wird der Bolzen 44a auf Scherung beansprucht und es kommt zu einer Änderung seines Magnetfeldes. Die Sensoreinrichtung D bzw. der Magnetfeldsensor der Sensoreinrichtung D erfasst das vom Bolzen 44a erzeugte Magnetfeld und ermittelt daraus die Belastung der Stütze 40. Alternativ kann die Belastung des Bolzens 44a auch anders erfasst werden. So kann die Sensoreinrichtung D einen Sensor aufweisen, der auf die Verformung des Bolzens 44a anspricht. Bevorzugt ist an dem oder in dem Bolzen 44a ein Dehnungsmessstreifen 58 (Fig. 11) vorgesehen, der ein die Stützkraft charakterisierendes Signal erzeugt. Eine Sensoreinrichtung E ist hier alternativ zwischen dem Stützfuß 48 und dem Hydraulikzylinder 46 angeordnet. Hierzu ist der Stützfuß 48 über einen vorzugsweise magnetisierten Bolzen 44b an dem Hydraulikzylinder 46 gelagert.

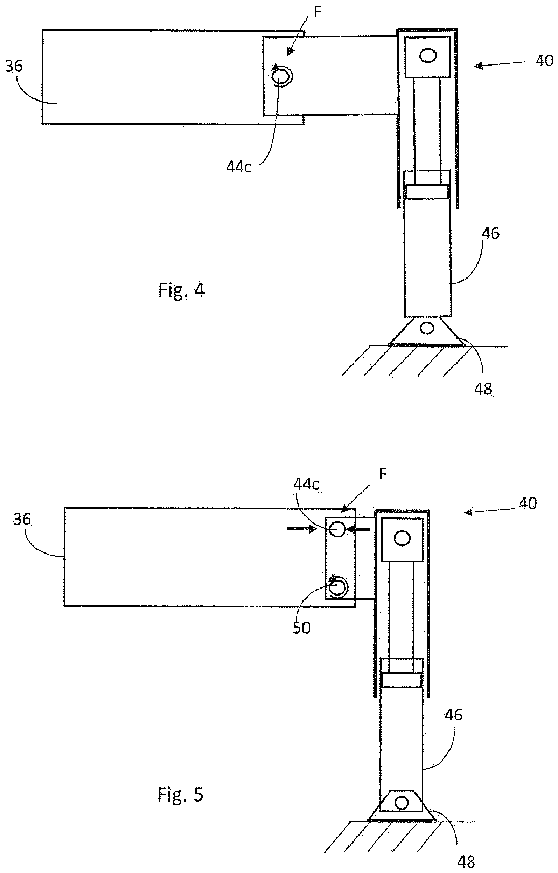

Figur 4 zeigt eine schematische Seitenansicht einer Abstützvorrichtung in einer dritten Ausgestaltung. Die Stütze 40 ist endseitig über einen vorzugsweise magnetisierten Bolzen 44c an dem Stützausleger 36 gelagert. Sobald der Großmanipulator 10 über den Stützfuß 48 abgestützt wird, wirkt eine Stützkraft.

Durch diese auf die Abstützvorrichtung wirkende Kraft wirkt auf den Bolzen 44c, der mir der Stütze 40 und mit dem Stützausleger drehfest verbunden ist, ein Drehmoment, wodurch sich das Magnetfeld des Bolzens 44c ändert. Diese Änderung wird von dem Magnetfeldsensor der Sensoreinrichtung F erfasst, wodurch sich die Stützkraft bestimmen lässt. Alternativ kann die Belastung des Bolzens 44c auch anders erfasst werden. So kann die Sensoreinrichtung F einen Sensor aufweisen, der auf die Verformung des Bolzens 44c anspricht. Bevorzugt ist an dem oder in dem Bolzen 44c ein Dehnungsmessstreifen 58 (Fig. 11) vorgesehen, der ein die Stützkraft charakterisierendes Signal erzeugt.

Figur 5 zeigt eine schematische Seitenansicht einer Abstützvorrichtung in einer vierten Ausgestaltung. Die Stütze 40 ist endseitig, wie auch schon in Figur 4, über den vorzugsweise magnetisierten Bolzen 44c' an dem Stützausleger 36 gelagert. Zusätzlich ist die Stütze 40 aber noch über einen Lagerbolzen 50 an dem Stützausleger 36 gelagert. Diese Ausgestaltung bietet den Vorteil, dass der vorzugsweise magnetisierte Bolzen 44c kleiner ausgebildet sein kann, da er nicht die volle Stützkraft trägt. Die Stütze 40 und der Stützausleger 36 sind dabei so über den Lagerbolzen 50 miteinander verbunden, dass bei Vorliegen einer Stützkraft der vorzugsweise magnetisierte Bolzen 44c auf Scherung beansprucht wird.

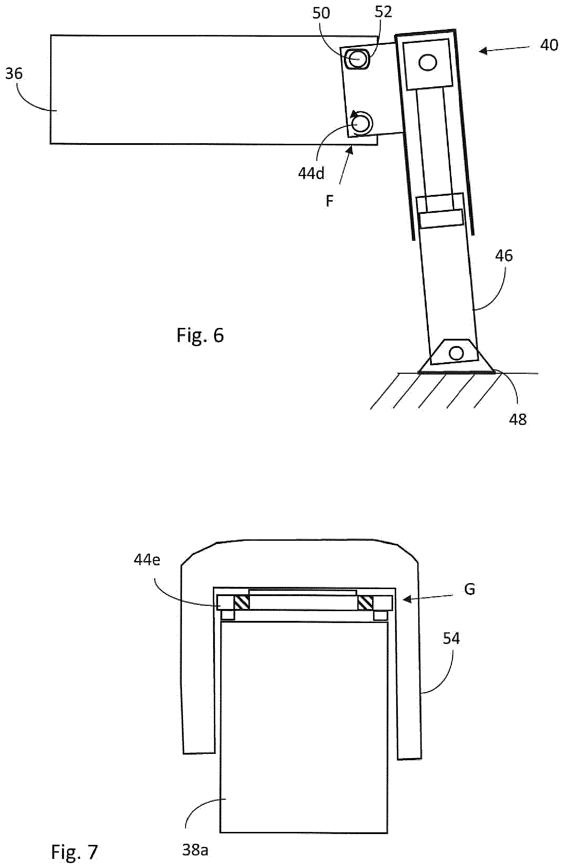

Figur 6 zeigt eine schematische Seitenansicht einer Abstützvorrichtung in einer fünften Ausgestaltung. Wie in Figur 5 ist die Stütze 40 mittels zweier Bolzen, nämlich einem Lagerbolzen 50 und einem vorzugsweise magnetisierten Bolzen 44d, am Stützausleger 36 angeordnet. Allerdings unterscheidet sich die Ausgestaltung der Lagerbolzenverbindung zwischen Stützausleger 36 und Stütze 40 von der in Figur 5 dargestellten Verbindung. Die Stütze 40 und der Stützausleger 36 sind in Figur 6 so über den Lagerbolzen 50 miteinander verbunden, dass eine auf die Abstützvorrichtung wirkende Stützkraft zu einer Drehmomentbeanspruchung des Bolzens 44d führt. Dies wird dadurch erreicht, dass der Lagerbolzen 50 relativ zum Stützausleger 36 oder relativ zur Stütze 40 in Richtung quer zu seiner Längserstreckung verlagerbar ist. Hierzu weist entweder die Stütze 40 oder der Stützausleger 36 einen Langloch 52 auf, innerhalb dessen der Lagerbolzen 50 begrenzt verschiebbar angeordnet ist.

Figur 7 zeigt eine schematische Ansicht einer Abstützvorrichtung in einer sechsten Ausgestaltung. Die Abstützvorrichtung weist einen ausfahrbaren Stützausleger 38a auf, der (in Richtung senkrecht zur Darstellungsebene) teleskopierbar ist. An dem Grundrahmen 12 des Fahrzeugs ist eine Führung 54 angeordnet, die den Stützausleger 38a führt. Der vorzugsweise magnetisierte Bolzen 44e ist dabei Teil der Führung 54, so dass die wirkende Stützkraft jedenfalls teilweise über den Bolzen 44e auf den Grundrahmen 12 übertragen wird. Dabei wird der Bolzen 44e auf Scherung beansprucht. Die Veränderung des Magnetfelds des vorzugsweise magnetisierten Bolzens 44e, die sich durch das Einwirken der Scherkraft und die entsprechende Verformung des Bolzens 44e ergibt, wird von der Sensoreinrichtung G erfasst. Alternativ kann die Verformung des Bolzens 44e auch anders erfasst werden. So kann die Sensoreinrichtung G einen Sensor aufweisen, der auf die Verformung des Bolzens 44e anspricht. Bevorzugt ist an dem oder in dem Bolzen 44e ein Dehnungsmessstreifen 58 (Fig. 11) vorgesehen, der ein die Stützkraft charakterisierendes Signal erzeugt.

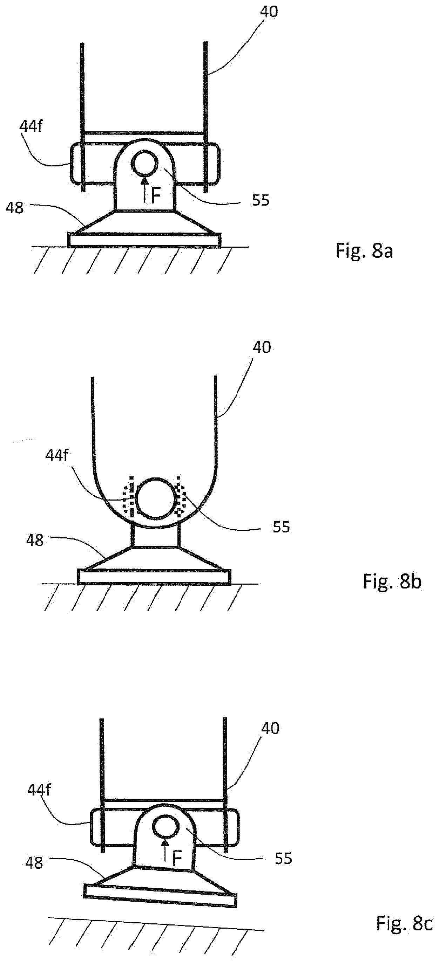

Die Figuren 8a, 8b und 8c zeigen eine schematische Ansicht einer erfindungsgemäßen Abstützvorrichtung in einer siebten Ausgestaltung, die eine Verbesserung zur Sensoreinrichtung E gemäß den Figuren 3a und 3b darstellt. Auch bei dieser Ausgestaltung ist der vorzugsweise magnetisierte Bolzen 44f zwischen der Stütze 40 und dem Stützfuß 48 am unteren Ende des Hydraulikzylinders 46 angeordnet. Zwischen dem Stützfuß 48 und der Stütze 40 ist eine Kardangelenkanordnung 55 vorgesehen, wobei der vorzugsweise magnetisierte Bolzen 44f ein Element der Kardangelenkanordnung bildet. In den Figuren 8a-c ist der vorzugsweise magnetisierten Bolzen 44f an der Stütze 46 angeordnet, kann alternativ aber auch am Stützfuß 48 angeordnet sein. Bei dieser Ausgestaltung wirkt die Stützkraft (dargestellt durch den Pfeil F) immer zentral, ohne seitlichen Versatz, auf den vorzugsweise magnetisierten Bolzen 44f, wodurch die Stützkraft auch dann noch mit hoher Genauigkeit bestimmt werden kann, wenn der Untergrund, auf dem der Großmanipulator abgestützt wird, nicht völlig eben ist und der Stützfuß 48 schräg zur Stütze, wie in Figur 8c, auf dem Boden aufsetzt.

Wie bereits in Zusammenhang mit der Bestimmung der Kräfte am Mastarm weiter oben erwähnt, können auch an einer Stütze 40 mehrere vorzugsweise magnetisierte Bolzen an verschiedenen Positionen mit entsprechenden Sensoren angeordnet sein, um redundante Messergebnisse zu erhalten.

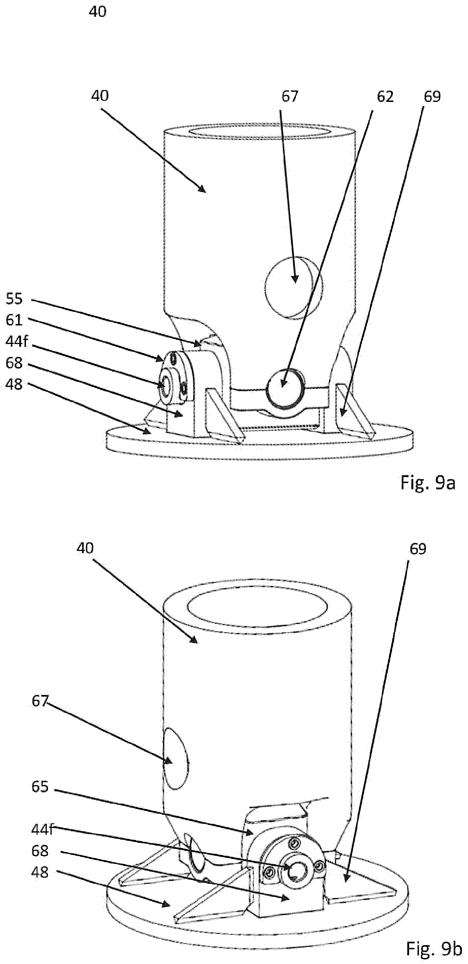

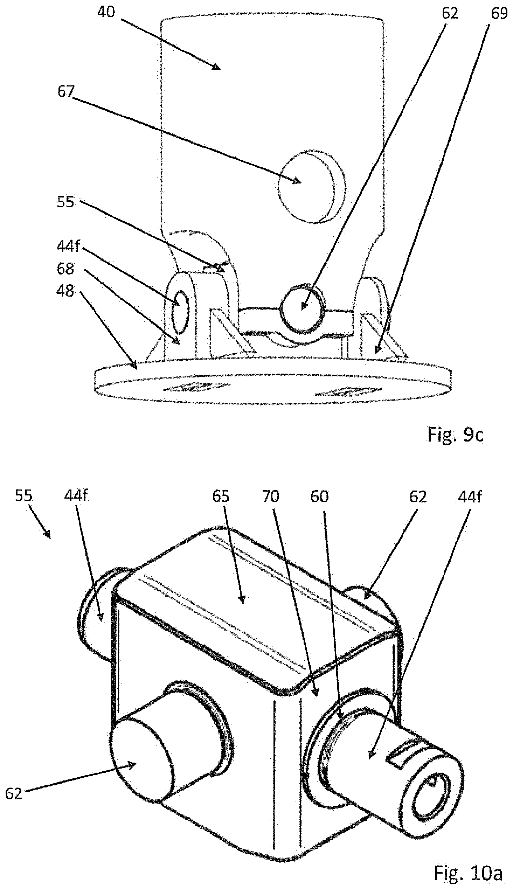

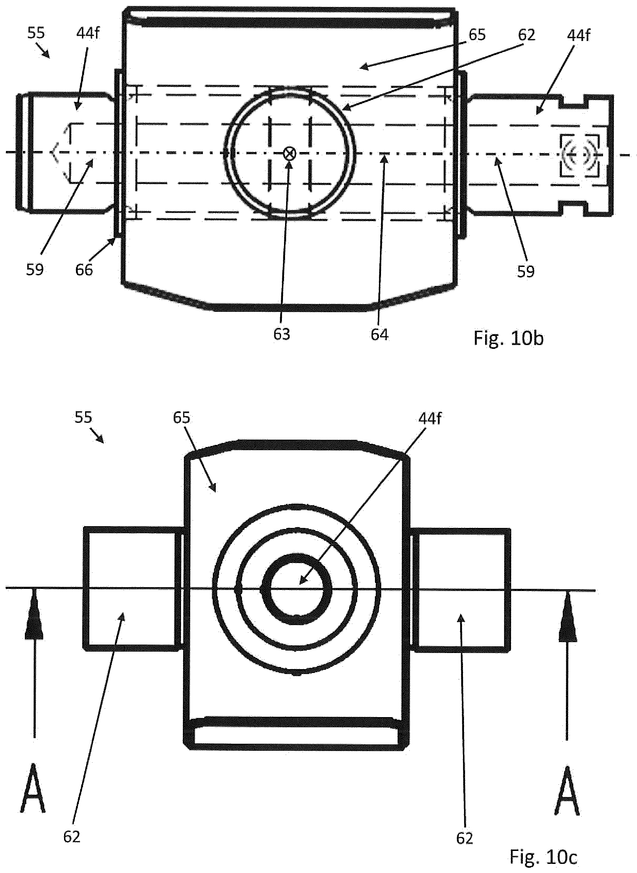

Die Figur 9a zeigt eine perspektivische Vorderansicht einer erfindungsgemäßen Abstützvorrichtung in siebter Ausgestaltung. Bei dieser Ausgestaltung ist der Bolzen 44f zwischen der Stütze 40 und dem Stützfuß 48 am unteren Ende des Hydraulikzylinders 46 (Fig. 5) angeordnet. Zur Anordnung des Hydraulikzylinders 46 (Fig. 5) weist die Stütze 40 eine Anlenkung 67 für den Hydraulikzylinder 46 (Fig. 5) auf. Zwischen dem Stützfuß 48 und der Stütze 40 ist eine Kardangelenkanordnung 55 vorgesehen, wobei der Bolzen 44f ein Element der Kardangelenkanordnung bildet. Dieses als Kreuzgelenk 55 ausgebildete Kardangelenk sorgt für eine bewegliche Lagerung des Stützfußes 48 an der Stütze 40. Der Bolzen 44 ist als Gelenkbolzen des Kreuzgelenkes 55 ausgebildet. Das Kreuzgelenk 55 weist einen weiteren, quer zum Bolzen 44f ausgerichteten Gelenklagerbolzen 62 auf, dessen Gelenkachse 63 (Fig. 10b) in einer Ebene mit der Gelenkachse 64 (Fig. 10b) des Bolzens 44f liegt. Der Bolzen 44f ist über eine Abstützlagerung 68 an dem Stützfuß 48 gelagert, wobei die Abstützlagerung 68 durch Stützbleche 69 gegenüber dem Stützfuß 48 verstärkt ist. In den Figuren 9a-c ist der Bolzen 44f am Stützfuß 48 angeordnet, kann alternativ aber auch an der Stütze 46 angeordnet sein. Auch bei dieser Ausgestaltung wirkt die Stützkraft immer zentral, ohne seitlichen Versatz, auf den vorzugsweise magnetisierten Bolzen 44f, wodurch die Stützkraft auch dann noch mit hoher Genauigkeit bestimmt werden kann, wenn der Untergrund, auf dem der Großmanipulator abgestützt wird, nicht völlig eben ist und der Stützfuß 48 schräg zur Stütze, wie in Figur 8c, auf dem Boden aufsetzt. Das Kreuzgelenk 55 weist eine Verdrehsicherung 61 auf, Das Kreuzgelenk 55 weist eine Verdrehsicherung 61 auf. Diese Verdrehsicherung 61 verhindert, dass der Bolzen 44 sich relativ zum Stützfuß 48 verdreht. Der Bolzen 44 ist in einem klotzförmigen Lagergehäuse 65 des Gelenklagerbolzens 62 gelagert, welches in Figur 9b gut zu erkennen ist. In Figur 9c ist gut zu erkennen, wie das mit dem Lagergehäuse 65 (Fig. 9b) ausgestattete Kreuzgelenk 55 bestehend aus den zwei Bolzen 44f, 62 eine in alle Richtungen bewegliche Lagerung des Stützfüßes 48 an der Stütze 40 ermöglicht. Die Verdrehsicherung 61 hat zusätzlich die Aufgabe den Bolzen 44 axial im Lagergehäuse 65 zu fixieren.

Die Figur 10a zeigt eine perspektivische Detailansicht von dem Kreuzgelenk 55, welches durch den Bolzen 44f und den Gelenklagerbolzen 62 gebildet ist. Der Gelenklagerbolzen 62 ist fest mit dem Lagergehäuse 65 verbunden. Die Anordnung des Bolzens 44f in dem Lagergehäuse 65 des Gelenklagerbolzens 62 sorgt dafür, dass die Stützkraft von dem Gelenklagerbolzen 62 optimal über das Lagergehäuse 65 auf den Bolzen 44f übertragen wird. Die ebene Seitenflächen 70 des Lagergehäuses 65 führen zu einer optimalen Übertragung der Scherverformung bzw. der Scherkraft auf den Bolzen 44f. Die Übertragung dieser Kräfte durch die Seitenflächen 70 auf den Bolzen 44f erfolgt besonders vorteilhaft im Bereich der umlaufenden Nuten 60 am Bolzen 44f, sodass die Stützkraft besonders genau bestimmt werden kann.

Die Figur 10b zeigt eine Seitenansicht vom Kreuzgelenk 55, wobei das Kreuzgelenk aus Sicht der Gelenkachse 63 des Gelenklagerbolzens 62 gezeigt ist. Wie gut zu erkennen ist, liegt die Gelenkachse 64 des Bolzens 44f quer zu der Gelenkachse 63 des Gelenklagerbolzens 62. Zudem liegen die Gelenkachsen 63, 64 in einer horizontalen Ebene. In Figur 10b außerdem durch Striche angedeutet, ist ein Hohlraum 59 in dem Bolzen 44f gebildet. In diesem Hohlraum 59 kann die Sensoreinrichtung und/oder der oder die Dehnungsmessstreifen angeordnet sein. Zwischen dem Bolzen 44f und dem Gelenklagerbolzen 62 ist ein selbstschmierendes Kunststofflager 66 angeordnet.

Die Figur 10c zeigt eine Seitenansicht vom Kreuzgelenk 55 aus Sicht der Gelenkachse 64 des Bolzens 44f. In dieser Figur ist eine Schnittebene A-A eingezeichnet.

Aus Figur 10d geht eine Schnittdarstellung des Kreuzgelenks 55 gemäß der in Figur 10c eingezeichneten Schnittebene A-A hervor. In dieser Schnittdarstellung ist gut zu erkennen, wie der Bolzen 44f in dem Lagergehäuse 65 des Gelenklagerbolzens 62 aufgenommen ist. Das selbstschmierende Kunststofflager 66 ist zwischen dem Bolzen 44f und dem Lagergehäuse 65 angeordnet. Die umlaufenden Nuten 60 am Bolzen 44f sind so angeordnet, dass die von den Seitenflächen 70 des Lagergehäuses 65 auf den Bolzen 44f übertragene Kraft als Scherkraft optimal zur Messung auf den Bolzen 44f eingeleitet wird.

Aus Figur 11 geht eine Schnittdarstellung des Kreuzgelenks 55 gemäß der in Figur 10c eingezeichneten Schnittebene A-A hervor. Anhand der Schnittdarstellung ist gut zu erkennen, dass mehrere Sensoren 71, 71a der Sensoreinrichtung H in dem Bolzen 44f angeordnet sind. Die zwei Sensoren 71,71a bieten bereits eine gewisse Redundanz, diese kann jedoch durch weitere Sensoren erhöht werden. Die Sensoren 71, 71a befinden sich in einem Hohlraum 59, der als Bohrung in dem Bolzen 44f angeordnet ist. Bei den Sensoren 71, 71a kann es sich zum einen um Magnetfeldsensoren handeln, die das von dem in diesem Fall magnetisierten Bolzen 44f erzeugte Magnetfeld detektieren. In diesem Fall ist der Bolzen 44f magnetisch codiert und die Sensoren 71, 71a, die im Hohlraum 59 im Bereich der Nuten 60 angeordnet sind, detektieren die Scherverformung des Bolzens 44f, bzw. die durch die Verformung des Bolzens 44f generierte Magnetfeldänderung. Alternativ sind die Sensoren 71, 71a als Dehnungsmessstreifen 58 ausgebildet und erzeugen ein die Stützkraft charakterisierendes Signal anhand der reversiblen Verformung des Bolzens 44f, die auf die in dem Bolzen 44f angeordneten Dehnungsmessstreifen 58 wirkt... Die im Bolzen 44f angeordnete Sensoreinrichtung H ist als Platine ausgebildet und umfasst zudem einen Verstärker 72 und/oder Messwertumformer für die Messsignale. Auf der rechten Seite ist ein Stecker 73 angeordnet mit dem die Signale der Sensoreinrichtung H an die Steuereinheit (nicht dargestellt) übermittelt werden können.

### Bezugszeichenliste

- 10: Großmanipulator
- 12: Fahrgestell/ Grundrahmen
- 14: Mast
- 16, 18, 20: Mastsegment
- 22: Abstützsystem
- 24, 26, 28: (magnetisierter) Gelenkbolzen
- 30: Drehschemel
- 32: vordere Abstützung
- 34: hintere Abstützung
- 36, 38, 38a: Stützausleger
- 40, 42: Stütze
- 44, 44a, 44b, 44c, 44d, 44e, 44f: (magnetisierter) Bolzen (Messbolzen)
- 46: Hydraulikzylinder
- 48: Stützfuß
- 50: Lagerbolzen
- 52: Langloch
- 54: Führung
- 55: Kardangelenk, Kreuzgelenk
- 56: Hydraulikzylinder Mastarm
- 57,57a: Bolzen Hydraulikzylinder
- 58: Dehnungsmessstreifen
- 59: Hohlraum
- 60: umlaufende Nut
- 61: Verdrehsicherung
- 62: Gelenklagerbolzen
- 63: Gelenkachse (Gelenklagerbolzen)
- 64: Gelenkachse (Bolzen)
- 65: Lagergehäuse
- 66: Kunststofflager
- 67: Anlenkung (Hydraulikzylinder)
- 68: Abstützlagerung
- 69: Stützbleche
- 70: Seitenflächen (Lagergehäuse)
- 71, 71a: Sensoren
- 72: Verstärker
- 73: Stecker

- A, B, Ba, Bb, C, D, E, F,G, H: Mastsensorik/ Sensoreinrichtung

## Patentansprüche

1. Abstützvorrichtung zum Abstützen einer mobilen Vorrichtung, insbesondere eines Fahrzeugs, am Boden, mit einer Stütze (40, 42) und einer Sensoreinrichtung (C, D, E, F, G), die ein stützkraftabhängiges Signal erzeugt, mit wenigstens einem Bolzen (44, 44a, 44b, 44c, 44d, 44e, 44f), der zumindest einen Teil der Stützkraft überträgt, wodurch der Bolzen (44, 44a, 44b, 44c, 44d, 44e, 44f) reversibel verformt wird, wobei die Sensoreinrichtung (C, D, E, F, G) auf die Verformung des Bolzens (44, 44a, 44b, 44c, 44d, 44e, 44f) anspricht, wobei die Stütze (40, 42) einen mittels eines Hydraulikzylinders (46) anheb- und absenkbaren Stützfuß (48) aufweist,
**dadurch gekennzeichnet,**
**dass** der Stützfuß (48) über ein Kreuzgelenk (55) an der Stütze (40, 42) gelagert ist, wobei der Bolzen (44f) ein Gelenkbolzen des Kreuzgelenks (55) ist.

2. Abstützvorrichtung nach Anspruch 1, **dadurch gekennzeichnet, dass** der Bolzen (44, 44a, 44b, 44c, 44d, 44e, 44f) magnetisiert ist, wobei die Sensoreinrichtung (C, D, E, F, G) einen Magnetfeldsensor aufweist, der das von dem magnetisierten Bolzen (44) erzeugte Magnetfeld detektiert.

3. Abstützvorrichtung nach Anspruch 2, **dadurch gekennzeichnet, dass** der magnetisierte Bolzen (44, 44a, 44b, 44c, 44d, 44e, 44f) eine magnetische Kodierung aufweist, die am Ort des Magnetfeldsensors durch den inversen magnetostriktiven Effekt ein die Stützkraft charakterisierendes Magnetfeld erzeugt.

4. Abstützvorrichtung nach Anspruch 2 oder 3, **dadurch gekennzeichnet, dass** die Sensoreinrichtung (C, D, E, F, G) die Beanspruchung des magnetisierten Bolzens (44, 44a, 44b, 44c, 44d, 44e, 44f) anhand des Magnetfeldes als Maß für die übertragene Stützkraft ermittelt.

5. Abstützvorrichtung nach Anspruch 1, **dadurch gekennzeichnet, dass** die Sensoreinrichtung (C, D, E, F, G) wenigstens einen Dehnungsmessstreifen (58) am oder im Bolzen (44, 44a, 44b, 44c, 44d, 44e, 44f) aufweist, der ein die Stützkraft charakterisierendes Signal erzeugt.

6. Abstützvorrichtung nach Anspruch 5, **dadurch gekennzeichnet, dass** der Bolzen (44, 44a, 44b, 44c, 44d, 44e, 44f) einen Hohlraum (59) zur Aufnahme von Sensoreinrichtung (C, D, E, F, G) und/oder Dehnungsmessstreifen (58) aufweist.

7. Abstützvorrichtung nach einem der Ansprüche 1 bis 6, **dadurch gekennzeichnet, dass** der Bolzen (44, 44a, 44b, 44c, 44d, 44e, 44f) mindestens eine umlaufende Nut (60) aufweist.

8. Abstützvorrichtung nach einem der Ansprüche 1 bis 7, **dadurch gekennzeichnet, dass** der Bolzen (44, 44a, 44b, 44c, 44d, 44e, 44f) bei der Übertragung der Stützkraft auf Scherung beansprucht wird.

9. Abstützvorrichtung nach einem der Ansprüche 1 bis 8, **dadurch gekennzeichnet, dass** das Kreuzgelenk (55) eine Verdrehsicherung (61) aufweist.

10. Abstützvorrichtung nach einem der Ansprüche 1 bis 9, **dadurch gekennzeichnet, dass** das Kreuzgelenk (55) einen weiteren, quer zum Bolzen (44f) ausgerichteten Gelenklagerbolzen (62) aufweist, dessen Gelenkachse (63) in einer Ebene mit der Gelenkachse (64) des Bolzens (44) liegt.

11. Abstützvorrichtung nach Anspruch 10, **dadurch gekennzeichnet, dass** der Bolzen (44f) in einem Lagergehäuse (65) des Gelenklagerbolzens (62) gelagert ist.

12. Abstützvorrichtung nach Anspruch 10 oder 11, **dadurch gekennzeichnet, dass** zwischen dem Bolzen (44f) und dem Gelenklagerbolzen (62) ein selbstschmierendes Kunststofflager (66) angeordnet ist.

## Claims

1. Supporting device for supporting a mobile device, in particular a vehicle, on the ground, comprising a support (40, 42) and a sensor means (C, D, E, F, G) which generates a signal that is dependent on the supporting force, comprising at least one bolt (44, 44a, 44b, 44c, 44d, 44e, 44f) which transfers at least a portion of the supporting force, as a result of which the bolt (44, 44a, 44b, 44c, 44d, 44e, 44f) is reversibly deformed, wherein the sensor means (C, D, E, F, G) responds to the deformation of the bolt (44, 44a, 44b, 44c, 44d, 44e, 44f), wherein the support (40, 42) comprises a support foot (48) which can be raised and lowered by means of a hydraulic cylinder (46),
**characterised in that**
the support foot (48) is mounted on the support (40, 42) by means of a universal joint (55), wherein the bolt (44f) is a pivot bolt of the universal joint (55).

2. Supporting device according to claim 1, **characterised in that** the bolt (44, 44a, 44b, 44c, 44d, 44e, 44f) is magnetised, wherein the sensor means (C, D, E, F, G) comprises a magnetic field sensor which detects the magnetic field generated by the magnetised bolt (44).

3. Supporting device according to claim 2, **characterised in that** the magnetised bolt (44, 44a, 44b, 44c, 44d, 44e, 44f) comprises a magnetic coding which generates a magnetic field, characterising the supporting force, at the location of the magnetic field sensor, by means of the inverse magnetostrictive effect.

4. Supporting device according to either claim 2 or claim 3, **characterised in that** the sensor means (C, D, E, F, G) determines the stress of the magnetised bolt (44, 44a, 44b, 44c, 44d, 44e, 44f) on the basis of the magnetic field as a measure for the transferred supporting force.

5. Supporting device according to claim 1, **characterised in that** the sensor means (C, D, E, F, G) comprises at least one strain gauge (58) on or in the bolt (44, 44a, 44b, 44c, 44d, 44e, 44f), which generates a signal characterising the supporting force.

6. Supporting device according to claim 5, **characterised in that** the bolt (44, 44a, 44b, 44c, 44d, 44e, 44f) comprises a cavity (59) for receiving the sensor means (C, D, E, F, G) and/or strain gauge (58).

7. Supporting device according to any of claims 1 to 6, **characterised in that** the bolt (44, 44a, 44b, 44c, 44d, 44e, 44f) comprises at least one peripheral groove (60).

8. Supporting device according to any of claims 1 to 7, **characterised in that** the bolt (44, 44a, 44b, 44c, 44d, 44e, 44f) is subjected to a shear stress during transfer of the supporting force.

9. Supporting device according to any of claims 1 to 8, **characterised in that** the universal joint (55) comprises an anti-rotation element (61).

10. Supporting device according to any of claims 1 to 9, **characterised in that** the universal joint (55) comprises a further spherical bearing bolt (62) which is oriented transversely to the bolt (44f) and the hinge axis (63) of which is located in a plane with the hinge axis (64) of the bolt (44).

11. Supporting device according to claim 10, **characterised in that** the bolt (44f) is mounted in a bearing housing (65) of the spherical bearing bolt (62).

12. Supporting device according to either claim 10 or claim 11, **characterised in that** a self-lubricating plastics bearing (66) is arranged between the bolt (44f) and the spherical bearing bolt (62).

## Revendications

1. Dispositif de support pour supporter un dispositif mobile, notamment un véhicule, sur le sol, avec un support (40, 42) et un appareil capteur (C, D, E, F, G) qui produit un signal dépendant de la force de support, avec au moins un boulon (44, 44a, 44b, 44c, 44d, 44e, 44f) qui transmet au moins une partie de la force de support, moyennant quoi le boulon (44, 44a, 44b, 44c, 44d, 44e, 44f) est déformé de manière réversible, l'appareil capteur (C, D, E, F, G) réagissant à la déformation du boulon (44, 44a, 44b, 44c, 44d, 44e, 44f), le support (40, 42) présentant un pied de support (48) pouvant être soulevé et abaissé au moyen d'un vérin hydraulique (46),
**caractérisé en ce que**
le pied de support (48) est monté sur le support (40, 42) par l'intermédiaire d'une articulation en croix (55), le boulon (44f) étant un boulon d'articulation de l'articulation en croix (55).

2. Dispositif de support selon la revendication 1, **caractérisé en ce que** le boulon (44, 44a, 44b, 44c, 44d, 44e, 44f) est magnétisé, l'appareil capteur (C, D, E, F, G) présentant un capteur de champ magnétique qui détecte le champ magnétique produit par le boulon magnétisé (44).

3. Dispositif de support selon la revendication 2, **caractérisé en ce que** le boulon magnétisé (44, 44a, 44b, 44c, 44d, 44e, 44f) présente un codage magnétique qui produit, à l'emplacement du capteur de champ magnétique, un champ magnétique caractérisant la force de support par l'effet magnétostrictif inverse.

4. Dispositif de support selon la revendication 2 ou 3, **caractérisé en ce que** l'appareil capteur (C, D, E, F, G) détermine la sollicitation du boulon magnétisé (44, 44a, 44b, 44c, 44d, 44e, 44f) à l'aide du champ magnétique en tant que mesure de la force de support transmise.

5. Dispositif de support selon la revendication 1, **caractérisé en ce que** l'appareil capteur (C, D, E, F, G) présente au moins une jauge de contrainte (58) sur ou dans le boulon (44, 44a, 44b, 44c, 44d, 44e, 44f), qui produit un signal caractérisant la force de support.

6. Dispositif de support selon la revendication 5, **caractérisé en ce que** le boulon (44, 44a, 44b, 44c, 44d, 44e, 44f) présente une cavité (59) pour recevoir l'appareil capteur (C, D, E, F, G) et/ou la jauge de contrainte (58).

7. Dispositif de support selon l'une quelconque des revendications 1 à 6, **caractérisé en ce que** le boulon (44, 44a, 44b, 44c, 44d, 44e, 44f) présente au moins une rainure périphérique (60).

8. Dispositif de support selon l'une quelconque des revendications 1 à 7, **caractérisé en ce que** le boulon (44, 44a, 44b, 44c, 44d, 44e, 44f) est soumis à un cisaillement lors de la transmission de la force de support.

9. Dispositif de support selon l'une quelconque des revendications 1 à 8, **caractérisé en ce que** l'articulation en croix (55) présente un moyen de blocage en rotation (61).

10. Dispositif de support selon l'une quelconque des revendications 1 à 9, **caractérisé en ce que** l'articulation en croix (55) présente un autre boulon de palier d'articulation (62) orienté transversalement au boulon (44f), dont l'axe d'articulation (63) est situé dans un plan avec l'axe d'articulation (64) du boulon (44).

11. Dispositif de support selon la revendication 10, **caractérisé en ce que** le boulon (44f) est monté dans un logement de palier (65) du boulon de palier d'articulation (62).

12. Dispositif de support selon la revendication 10 ou 11, **caractérisé en ce qu'**un palier en matière plastique autolubrifiant (66) est agencé entre le boulon (44f) et le boulon de palier d'articulation (62).
